# EUROPEAN PATENT SPECIFICATION

(11) **EP 2 890 133 B1**
(45) Date of publication and mention of the grant of the patent: **29.12.2021**
(21) Application number: 13791285.3
(22) Date of filing: 26.07.2013
(51) Int. Cl.: H04N 21/2187, H04N 21/231, H04N 21/845, H04L 29/08, H04L 29/06

(54) **SYSTEM AND METHOD FOR DISTRIBUTING LIVE BROADCAST CONTENT**
SYSTEM UND VERFAHREN ZUR VERTEILUNG VON LIVE-RUNDFUNKINHALTEN
SYSTÈME ET PROCÉDÉ DE DISTRIBUTION DE CONTENU DE DIFFUSION EN DIRECT

(30) Priority: 24.08.2012 CN 201210305430
(43) Date of publication of application: 01.07.2015
(73) Proprietor: ZTE Corporation, Shenzhen, Guangdong 518057 (CN)
(72) Inventor: WANG, Fang, Shenzhen Guangdong 518057 (CN); HUANG, Deguang, Shenzhen Guangdong 518057 (CN)
(74) Representative: Giraldi, Elisa
(86) International application number: PCT/CN2013/080191
(87) International publication number: WO 2013/170835

(56) References cited:
- WO-A1-2011/068784
- WO-A2-2011/108888
- CN-A- 101 710 965
- CN-A- 101 938 483
- CN-A- 102 098 310
- CN-A- 102 118 438
- US-A1- 2012 011 267

## Description

### Technical Field

The present invention relates to the field of multimedia technology, and more particularly, to a system and method for distributing live broadcast content.

### Background of the Related Art

Internet TV service is a quasi-real-time streaming media service based on the HTTP protocol. The service segments the program content into a lot of small segments, such as a segment of 10 seconds or 2 seconds. Then a playlist description file is used to gather these segments together. The playlist file describes the URLs (Uniform/Universal Resource Locators), durations, attributes (such as different bit rates) and time relationship of these segments and so on.

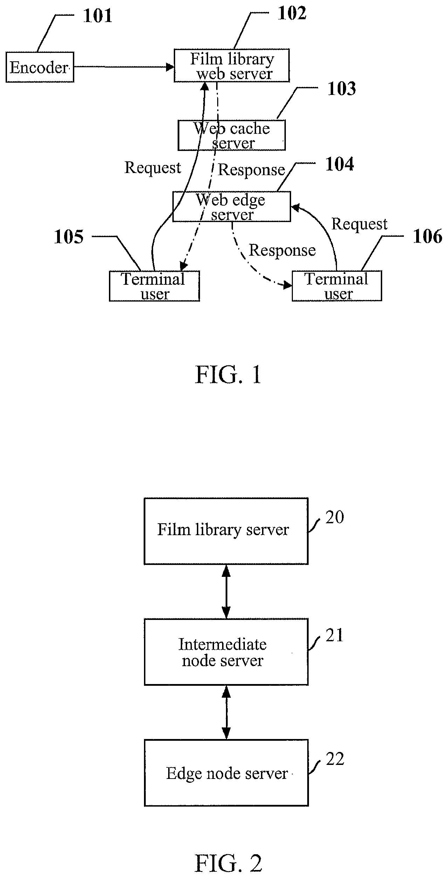

As shown in FIG. 1, FIG. 1 is a structural framework diagram of an existing Internet TV system achieving a live broadcast service, and the live broadcast encoder 101 uploads the media segment file and the playlist file to the film library web server 102 via the HTTP or FTP protocol and so on, or deletes or updates expired files in the web server 102. When a first user 105 requests the local edge web server 104 for the content service, if the edge web server 104 does not have the corresponding content file, a request will be initiated to the web cache server 103 at the upper level, and progressively traced to the film library 102. After the web cache server 103 receives the file content returned by the film library web server 102, the web cache server 103 forwards the file content to the edge web server while caches it in the local. Similarly, after receiving the file content returned by the web cache server 103, the edge web server 104 forwards the file content to the user terminal 105 while caches it in the local. Therefore, when the second user 106 requests for the same content service, the edge web server 104 can read the locally cached content to provide the service.

However, for the live broadcast service, since its playlist file and segment file are continuously updated and rolled back, if the content cached in the web server is read out to provide the service, it cannot guarantee that the content is up to date, leading to that the delay misalignment existing between the content viewed by the user and the live broadcast content viewed in the traditional mode further increases. Moreover, if the web server does not cache the corresponding content or the corresponding content has expired, the web server needs to real-time request the server at the upper level for the content, which increases the response delay of the user.

The document US20120011267A1 discloses a live streaming system/method provides cross platform live streaming capabilities to mobile devices. The live streaming system includes a live streaming recorder operative to capture a live media stream generated by a live media source and save the captured live media stream as a recorded stream in a recorded media file, and transcode the recorded stream into a plurality of transcoded media files of respective different media encoding formats. The system further includes a stream distribution subsystem operative to generate a plurality of distributed media streams each generated from one or more of the transcoded media files, each distributed media stream being delivered to a corresponding set of the mobile endpoint devices.

The document CN102118438A discloses a method and a device for live broadcasting an apple media stream in an Internet protocol television (IPTV) system. Code rate-adaptive live broadcasting services are provided for Apple terminals such as iphone, ipad, ipod touch and the like by adopting the technical scheme of integrating a hyper text transport protocol (http) stream in an apple format in the IPTV system to overcome the shortcoming of code rate singleness in the media file transmission of the conventional IPTV system integrating a real time streaming protocol (RTSP). Moreover, a content distribution network of the IPTV system can be scaled up in actual application based on the technical scheme provided by the invention so as to solve the problem of access of mass users at the same time of ensuring the broadcasting performance of the network by an adaptive code stream regulation technology.

### Summary of the Invention

In view of the abovementioned analysis, the embodiment of the present invention is to provide a system according to claim 1 and method according to claim for distributing live broadcast content, to solve the problem that there is a relatively large delay in the live broadcast content in the existing Internet TV service. Further improvements and embodiments are provided in the dependent claims.

The beneficial effects of the embodiment of the present invention are as follows:
in the embodiment of the present invention, the HTTP live broadcast content generated by the live broadcast encoder is timely distributed to the edge node server, to provide the HTTP live broadcast service for the user terminal in the neighborhood, thereby reducing the response delay of the user requesting service, as well as reducing the delay misalignment between the content viewed by the user and the traditional real-time live broadcast content.

### Brief Description of the Drawings

FIG. 1 is a structural framework diagram of an Internet TV system achieving a live broadcast service in the related art;
FIG. 2 is a schematic diagram of the structure of a system embodiment in the present invention;
FIG. 3 is a schematic diagram of the structure of a preferred system embodiment in the present invention;
FIG. 4 is a schematic diagram of a specific implementation process of segmenting the HTTP signaling in accordance with an embodiment of the present invention;
FIG. 5 is a schematic diagram of a specific implementation process of recovering the RTP data packets in accordance with an embodiment of the present invention;
FIG. 6 is a schematic diagram of the process of a method embodiment in the present invention.

### Preferred Embodiments of the Invention

Hereinafter, the preferred embodiments of the present invention will be described in detail in conjunction with the accompanying drawings, wherein the accompanying drawings form a part of this application and together with the embodiments of the present invention serve to explain the principles of the embodiment of the present invention.

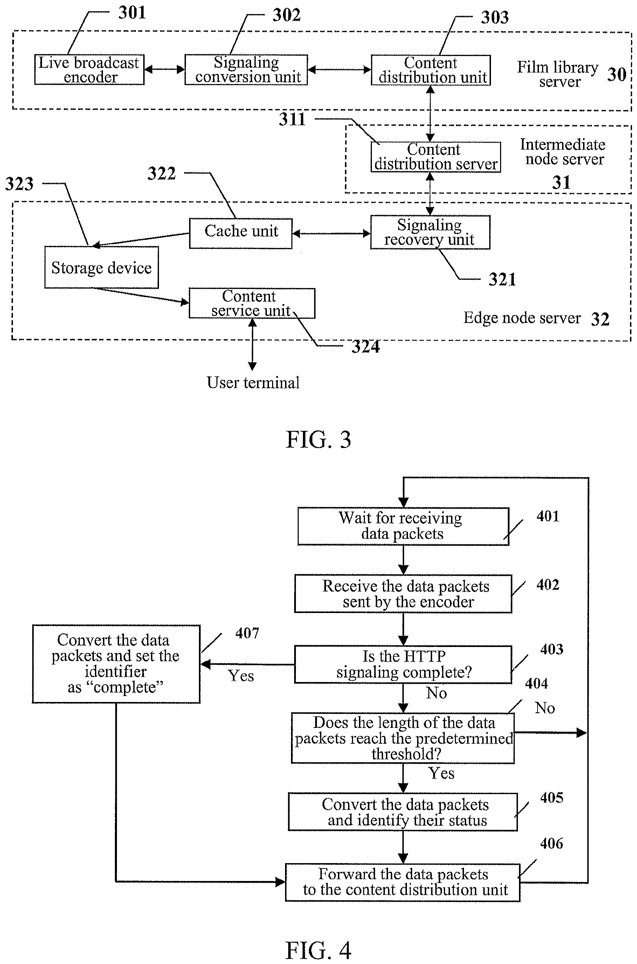

First, the system in accordance with an embodiment of the present invention will be described in detail in combination with FIG. 2 and FIG. 3.

As shown in FIG. 2, FIG. 2 is a schematic diagram of the structure of the system in accordance with an embodiment of the present invention, specifically comprising:
a film library server, an intermediate node server and an edge node server, wherein
the film library server 20 is configured to convert a signaling sent by a live broadcast encoder for uploading/deleting/updating a file into live broadcast streaming data packets in a predetermined format, and actively push the live broadcast streaming data packets to the intermediate node server 21, or send the live broadcast streaming data packets to the intermediate node server 21 when the intermediate node server 21 initiates a service request;
the intermediate node server 21 is configured to actively pull the live broadcast streaming data packets from the film library server 20 or receive the live broadcast streaming data packets actively pushed by the film library server 20, and actively push the live broadcast streaming data packets to the edge node server 22;
the edge node server 22 is configured to actively pull a plurality of live broadcast streaming data packets from the intermediate node server 21 or receive the live broadcast streaming data packets actively pushed by the intermediate node server, and recover them to the signaling previously sent by the live broadcast encoder, as well as generate/delete/update a corresponding media segment file and playlist description file according to the instruction of the signaling.

Hereinafter, the preferred system embodiment of the present invention will be further illustrated, and for ease of understanding, the description assumes that the live broadcast encoder uses the HTTP signaling, and the predetermined conversion format is the RTP format, and the payload of the RTP data packet is the segmented HTTP signaling.

The data packet in the RTP format needs to comprise the following information:
a channel identifier, since the encoder may simultaneously upload/update a media file through a plurality of HTTP/FTP channels, the channel identifier is used to identify different HTTP/FTP channels used by the encoder;
a packet sequence number, which is used to judge whether there are situations such as the packet loss or disordering and so on; data packets with different channel identifiers can use their own independent sequence number space;
status information, such as the offset position of the data packet in the original signaling packets, or the status information that the data packet belongs to the first packet, the last packet or an intermediate packet of the original signaling packets and so on;
alternatively, it may also comprise the transport information used by the original signaling, such as transport protocol (HTTP/FTP), transport port number and so on.

As shown in FIG. 3, FIG. 3 is a schematic diagram of the structure of a preferred system embodiment of the present invention, specifically comprising: the film library server 30, intermediate node server 31 and edge node server 32, wherein the film library server 30 specifically comprises: the live broadcast encoder 301, signaling conversion unit 302 and content distribution unit 303; the edge node server 32 specifically comprises: the signaling recovery unit 321, cache unit 322, storage device 323 and content service unit 324.

After generating a media segment file and a playlist description file, the live broadcast encoder 301 sends the signaling conversion unit 302 the signaling for uploading/deleting/updating a file via the PUT/DELETE/UPDATE message and so on in the HTTP format;
after receiving the HTTP signaling sent by the live broadcast encoder 301 for uploading/deleting/updating a file, the signaling conversion unit 302 returns a response message to the live broadcast encoder and repacks the HTTP signaling for uploading/deleting/updating the file, converting into data packets in the RTP format, and then it forwards the data packets to the content distribution unit 303.

It should be noted that, after receiving the HTTP signaling for uploading/deleting/updating a file from the encoder 301, the signaling conversion unit 302 segments and converts the signaling into data packets in the RTP (Real-Time Transport Protocol) format according to the predetermined threshold of length. Since a HTTP signaling may be very long, in order to ensure the timeliness of content distribution and reduce the delay, the signaling conversion unit 302 does not have to wait for receiving the complete HTTP signaling to perform the conversion, and a portion of the data can be packed and forwarded after being received, and the specific process can refer to the related description in the following FIG. 4.

Furthermore, in order to facilitate the subsequent processing of the signaling recovery unit 321, it is better not to put different HTTP signalings in one RTP data packet, in addition, the status of a RTP data packet is identified in the header of the RTP data packet, for example, it is the first packet, the last packet or complete data packet of one HTTP signaling and so on, and then the RTP data packet is submitted to the content distribution unit 303 and actively pushed to the content distribution unit of the intermediate server node through the unicast or multicast mode, or pulled by the content distribution unit of the intermediate service node, for example, a RTSP link to the content distribution unit 303 is established through the RTSP (Real Time Streaming Protocol)/RTP mode to pull the converted RTP data packets; or the converted data packets are pulled via the HTTP mode, and the RTP data packets are multiplexed into the HTTP channel for transmission.

Because the live broadcast encoder 301 may simultaneously send the HTTP signalings of a plurality of files of the same live broadcast content to the signaling conversion unit 302 through a plurality of HTTP links, the signaling conversion unit 302 needs to perform processing while conversion, so as to avoid mixing these different HTTP signalings. For example, for the abovementioned distribution via the RTP mode, and in the RTP data packets, the signaling conversion unit 302 may use different SSRCs (Synchronization Source, synchronous source field in the RTP data packet) to identify the HTTP signalings sent by the live broadcast encoder 301 through different HTTP links, and when the content distribution unit 303 distributes the converted RTP data packets, the RTP data packets with different SSRCs can be distributed by using different RTP channels or distributed by multiplexing the same RTP channel, and the receiving party, that is, the content distribution unit of the intermediate node server can performs distinguishing through the SSRC. For the abovementioned distribution via the HTTP mode, the signaling conversion unit 302 may forward the requests received through different HTTP channels to the content distribution unit 303 through different HTTP channels as well.

The content distribution unit 303 is responsible for distributing these RTP data packets in the intermediate node server, if there are several levels of intermediate nodes, continuing to distribute the data packets to the next level of intermediate node server, until to the edge node server. During the distribution, the mode in which the content distribution unit 303 actively pushes the data packets to the content distribution unit 311 of the intermediate node server 31 or the mode in which the content distribution unit 311 of the intermediate node server 31 pulls the data packets may be employed; if there are several levels of intermediate node servers, its distribution mode can also be actively pushing or the lower-level intermediate node server pulling. Similarly, the content distribution unit 303 may also use different HTTP or RTP channels to forward the data packets to the content distribution unit of the intermediate node server.

The content distribution unit 311 of the intermediate node server 31 receives the RTP data packets actively pushed by the content server 303 and actively pushes the RTP data packets to the content distribution unit of intermediate server at the lower level or the signaling recovery unit 321 of the edge node server 32, it can also actively pull the RTP data packets from the content distribution unit 303.

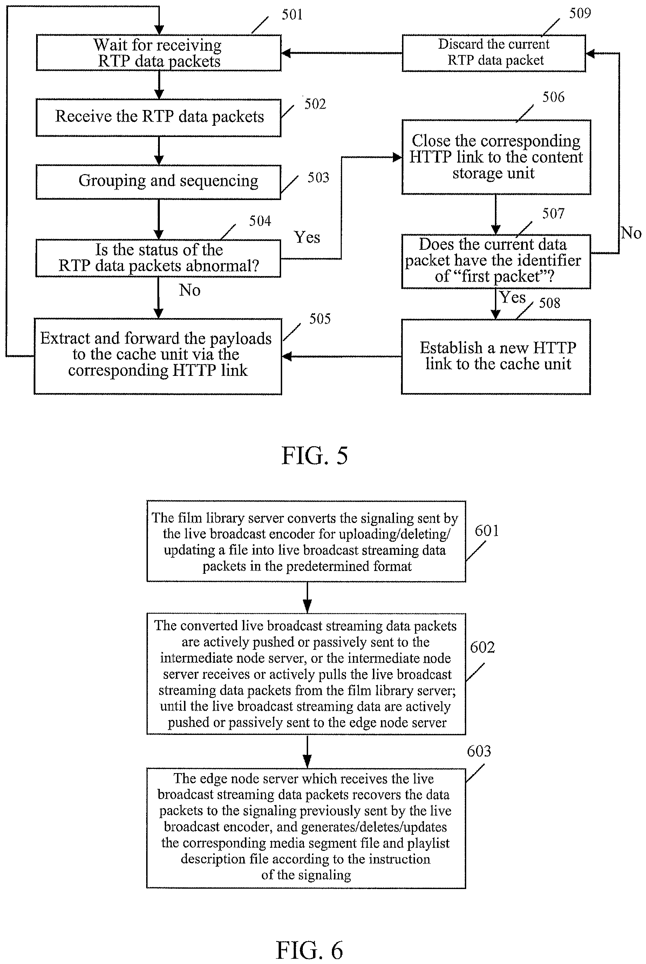

The signaling recovery unit 321 uses a method similar to the one used by the intermediate node server to receive the RTP data packets actively pushed by the content distribution unit of its intermediate node server at upper level, or obtains the RTP data packets from the content distribution unit of its intermediate node server at upper level through the pulling method, recovering the received RTP data packets to the data packets in the HTTP signaling format previously sent by the live broadcast encoder 301, and it sends the data packets to the cache unit 322. The signaling recovery unit 321 does not have to wait for receiving all the converted RTP packets of a complete HTTP signaling to perform the signaling recovery, and the specific recovery process can refer to the related description in FIG. 5.

The cache unit 322 analyzes the received HTTP signaling, and generates/updates/deletes the corresponding media segment file and the playlist description file in the storage device 323 according to the instruction of the HTTP signaling; wherein the storage device 323 may be a memory or a peripheral device such as a disk or a disk array.

The content service unit 324, when a user terminal requests the edge node server for live broadcast service, the content service unit 324 is responsible for receiving and analyzing the HTTP GET request of the user terminal, reading and returning the corresponding media segment file and the playlist description file in the storage device 323 to the user terminal.

The specific implementation process of the signaling conversion unit 302 segmenting the HTTP signaling is shown in FIG. 4, specifically comprising:
step 401: waiting for receiving data packets, sent by the live broadcast encoder, which constitute the HTTP signaling;
step 402: receiving the data packets, sent by the live broadcast encoder, which constitute the HTTP signaling;
step 403: judging whether the received data packets are a complete HTTP signaling or not, if yes, proceeding to step 407; if no, executing step 404:
step 404: judging whether the length of the received data packets is greater than the predetermined threshold (usually not more than the size of the maximum transmission unit (MTU) transmitted through the network, for example, the size can be set to 1400 bytes) or not, and if yes, executing step 405, otherwise proceeding to step 401 and continue to wait;
in step 405: converting this part of data into RTP data packets, and identify the status of the RTP data packets, such as the "the first packet";
step 406: forwarding the RTP data packets to the content distribution unit 303 and return back to step 401;
step 407: converting the current data packet into a RTP data packet and set the status of the RTP data packet to a "complete packet".

It should be noted that, in order to ensure the timely forwarding of data, a timeout period can also be set, and for the data that have not reached the aforementioned conversion conditions yet when exceeding the timeout period, the data are converted compulsorily.

The specific implementation process of the signaling recovery unit 321 recovering the RTP data packets is shown in FIG. 5, specifically comprising:
step 501: waiting for receiving each RTP data packet;
step 502: receiving a RTP data packet sent by the signaling forwarding unit through the content distribution unit 303 and the intermediate node server;
step 503: after receiving the RTP data packet, grouping the data packet according to the channel identifier therein; then performing sequencing on the data packet according to the packet sequence number;
step 504: judging whether the RTP data packet is abnormal or not according to the status information, and if yes, proceeding to step 506, otherwise executing step 505;
step 505: extracting and forwarding the payload in the RTP data packet to the cache unit 322 via the corresponding HTTP link, and returning to step 501;
step 506: closing the corresponding HTTP link to the cache unit 322;
step 507: judging whether the RTP data packet is the "first packet" or not, and if yes, executing step 508, otherwise proceeding to step 509;
step 508: establishing a new HTTP link to the cache unit 322, and executing step 505;
step 509: discarding the RTP data packet, and proceeding to step 501, and establishing a new HTTP link until a RTP data packet identified with the "first packet" is received again.

The above description takes what is used by the live broadcast encoder being the HTTP signaling and the predetermined conversion format being the RTP format as an example to illustrate the apparatus in accordance with the embodiment of the present invention, and the embodiment of the present invention is also applicable to a live broadcast encoder using the FTP signaling and its implementation process is similar and is not repeated here.

Next, in conjunction with FIG. 6, the method in accordance with the embodiment of the present invention will be described in detail.

As shown in FIG. 6, FIG. 6 is a schematic diagram of the process of the method in accordance with the embodiment of the present invention, mainly comprising:
step 601: the film library server converts the signaling sent by the live broadcast encoder for uploading/deleting/updating a file into live broadcast streaming data packets in a predetermined format; wherein the live broadcast streaming data packet in the predetermined format needs to comprise the following information:
a channel identifier, since the encoder may simultaneously upload/update a media file through a plurality of HTTP/FTP channels, the channel identifier is used to identify different HTTP/FTP channels used by the encoder;
a packet sequence number, which is used to judge whether there are situations such as the packet loss or disordering and so on; data packets with different channel identifiers can use their own independent sequence number space;
status information, such as the offset position of the data packet in the original signaling packets, or the status information that the data packet belongs to the first packet, the last packet or an intermediate packet of the original signaling packets and so on;
alternatively, it may also comprise the transport information, such as the transport protocol (HTTP/FTP), the transport port number and so on, used by the original signaling.

Step 602: the converted live broadcast streaming data packets are actively pushed or passively sent to the intermediate node server, or the intermediate node server receives or actively pulls the live broadcast streaming data packets from the film library server; until the live broadcast streaming data are actively pushed or passively sent to the edge node server; wherein the step of converting the signaling into a live broadcast stream in the predetermined format specifically may comprise: after receiving a signaling sent by the live broadcast encoder for uploading/deleting/updating a file, the film library server judging whether the signaling is complete or not, if yes, converting the signaling into live broadcast streaming data packets in the predetermined format; if no, judging whether the length of data of the received signaling meets the predetermined threshold or not, and converting the data whose length meets the predetermined threshold into live broadcast streaming data packets in the predetermined format; continuing to receive data of the signaling if the length of data of the received signaling is less than the predetermined threshold, performing conversion until its length meets the predetermined threshold or the signaling is complete; and performing conversion compulsorily on data which are still incomplete or whose length has not reached the predetermined threshold yet after exceeding the predetermined timeout period.

Step 603: the edge node server which receives the live broadcast streaming data packets recovers the data packets to the signaling previously sent by the live broadcast encoder, and generates/deletes/updates the corresponding media segment file and the playlist description file according to the instruction of the signaling; wherein the step of recovering the data packets to the signaling previously sent by the live broadcast encoder specifically may comprise: after the edge node server receives the live broadcast streaming data packets, firstly grouping the data packets according to the channel identifiers therein; then performing sequencing on the data packets according to the packet sequence numbers; for each data packet, judging whether the data packet is abnormal or not (whether there is packet loss, check the status information, etc.), and if there is no abnormality, then extracting and recovering the payload therein to the signaling form previously sent by the live broadcast stream server; if there is an abnormality, then discarding the data packet.

When there is a user terminal requesting for live service, the edge node server reads and returns the corresponding media segment file and the playlist description file to the user terminal according to the request.

Since the specific implementation process in accordance with the method embodiment of the present invention has been described in detail in the abovementioned system, it is not repeated here.

In summary, the embodiment of the present invention provides a system and method for distributing live broadcast content, and the technical solution in accordance with the embodiment of the present invention may be used to timely distribute the HTTP live broadcast content generated by the live broadcast encoder to the edge node server, to provide the user terminal in the neighborhood with the HTTP live broadcast service, so as to reduce the response delay of the user requesting service and reduce the delay misalignment between the content viewed by the user and the traditional real-time live broadcast content, thereby improving the user's watching experience. Moreover, for the intermediate non-edge node servers, only simple content distribution and stream forwarding are needed, and there is no need to cache any files, which can greatly reduce the occupancy of the server's resources. In addition, for the film library server and the intermediate node server, there is no need to deploy a cache unit and a storage device, that is, the media segmentation file and the playlist description file are not cached, thereby achieving the purpose of reducing the resource consumption.

The above description is only preferred embodiments of the present invention and not intended to limit the protection scope of the present invention.

### Industrial Applicability

The embodiment of the present invention provides a system and a method for distributing live broadcast content according to the independent claims; the embodiment of the present invention can reduce a response delay of the user requesting service and decrease a delay misalignment between content viewed by the user and the conventional live broadcast content.

## Claims

1. A system for distributing live broadcast content, comprising: a film library server (20, 30), an intermediate node server (21, 31) and an edge node server (22, 32), wherein
the film library server (20, 30) comprises at least: a live broadcast encoder (301), a signaling conversion unit (302) and a content distribution unit (303);
wherein, the live broadcast encoder (301) is configured to, after generating a media segment file and a playlist description file, send a signaling for uploading/deleting/updating said generated file to the signaling conversion unit (302), wherein the signaling for uploading/deleting/updating said generated file is a HTTP signaling or FTP signaling;
the signaling conversion unit (302) is configured to receive the signaling for uploading/deleting/updating the file, repack the received signaling for uploading/deleting/updating the file into live broadcast streaming data packets in a RTP, Real-Time Transport Protocol, format, and push the live broadcast streaming data packets to the intermediate node server (21, 31) through the content distribution unit (303), or send the live broadcast streaming data packets to the intermediate node server (21, 31) as requested by the intermediate node server (21, 31) through the content distribution unit (303);
the intermediate node server (21, 31) is configured to receive the live broadcast streaming data packets from the film library server (20, 30), and push the live broadcast streaming data packets to the edge node server (22, 32), or send the live broadcast streaming data packets to the edge node server (22, 32) as requested by the edge node server (22, 32);
the edge node server (22, 32) comprises a storage device and is configured to receive the live broadcast streaming data packets from the intermediate node server (21, 31), and recover the signaling for uploading/deleting/updating the file previously sent by the live broadcast encoder (301) from the live broadcast streaming data packets, as well as trigger to generate /delete/update a corresponding media segment file and playlist description file in its storage device according to an instruction of the recovered signaling.

2. The system of claim 1,
wherein the signaling conversion unit (302) is further configured to: after receiving the signaling for uploading/deleting/updating the file, determine whether the signaling is complete or not, and if yes, repack the signaling into live broadcast streaming data packets in the RTP format, and trigger the content distribution unit (303); if no, determine whether the length of data of the received signaling meets a predetermined threshold or not, and repack data whose length meets the predetermined threshold into live broadcast streaming data packets in the RTP format; if the length of data of the received signaling is less than the predetermined threshold, continue to receive data of the signaling, and perform repacking until the length meets the predetermined threshold or the signaling is complete; and perform repacking compulsorily on data which is still incomplete or whose length has not reached the predetermined threshold yet after exceeding a predetermined timeout period; and trigger the content distribution unit (303) after repacking.

3. The system of claim 1 or 2, wherein the edge node server (22, 32) further comprises at least: a signaling recovery unit (321) and a cache unit (322), wherein
the signaling recovery unit (321) is configured to: after receiving the live broadcast streaming data packets, recover the live broadcast streaming data packets to a signaling for uploading/deleting/updating the file previously sent by the live broadcast encoder (301), and determine whether the recovered data packets are abnormal or not, and if yes, discard the data packets; if no, extract and send payloads therein to the cache unit (322);
the cache unit (322) is configured to put together payloads obtained through several times into a complete signaling for uploading/deleting/updating the file, and trigger the storage device (323) to generate/delete/update a corresponding media segment file and playlist description file according to an instruction of the complete signaling;
the storage device (323) is configured to store the media segment file and the playlist description file.

4. The system of claim 3, wherein the edge node server (22, 32) further comprises:
a content service unit (324), which is configured to: when there is a user terminal requesting for live broadcast service, read and return the corresponding media segment file and playlist description file to the user terminal according to the request.

5. The system of claim 3, wherein the live broadcast streaming data packet comprises at least: a packet sequence number, a channel identifier and status information whether a data packet is complete or not, and the signaling recovery unit (321) is configured to: after receiving the live broadcast streaming data packets, perform grouping according to the channel identifiers therein; then perform sequencing on the data packets according to the packet sequence numbers; for each data packet, determine whether the data packet is abnormal or not according to the status information, if no, extract and send a payload therein to the cache unit (322), otherwise, discard the data packet.

6. A method for distributing live broadcast content, comprising
a live broadcast encoder, after generating a media segment file and a playlist description file, sending a signaling for uploading/deleting/updating said generated file to a signaling conversion unit, wherein the signaling for uploading/deleting/updating said generated file is a HTTP signaling or FTP signaling;
the signaling conversion unit repacking the received signaling for uploading/deleting/updating the file into live broadcast streaming data packets in a RTP, Real-Time Transport Protocol, format (601), and pushing the live broadcast streaming data packets to an intermediate node server through a content distribution unit, or sending the live broadcast streaming data packets to the intermediate node server as requested by the intermediate node server through the content distribution unit, until an edge node server receives the live broadcast streaming data packets from the intermediate node server (602);
the edge node server which receives the live broadcast streaming data packets recovering the live broadcast streaming data packets to the signaling for uploading/deleting/updating the file previously sent by the live broadcast encoder, and triggering to generate/delete/update a corresponding media segment file and playlist description file in its storage device according to an instruction of the recovered signaling (603).

7. The method of claim 6, wherein the method further comprises:
when there is a user terminal requesting for live broadcast service, the edge node server reads and returns the corresponding media segment file and playlist description file to the user terminal according to the request.

8. The method of claim 6 or 7, wherein the step of repacking the received signaling for uploading/deleting/updating the file into a live broadcast stream in a RTP format comprises:
after receiving the signaling for uploading/deleting/updating the file (402) from the live broadcast encoder, the film library server determining whether the signaling is complete or not (403), if yes, repacking the signaling into live broadcast streaming data packets in the RTP format (407); if no, determining whether the length of data of the received signaling meets a predetermined threshold or not (404), and repacking data whose length meets the predetermined threshold into live broadcast streaming data packets in the RTP format (405); continuing to receive data of the signaling if the length of data of the received signaling is less than the predetermined threshold, and performing repacking until the length meets the predetermined threshold or the signaling is complete (405).

9. The method of claim 8, wherein the method further comprises:
performing repacking compulsorily on data which is still incomplete or whose length has not reached the predetermined threshold yet after exceeding a predetermined timeout period.

10. The method of claim 6 or 7, wherein the live broadcast streaming data packet comprises at least: a packet sequence number, a channel identifier, and status information whether a data packet is complete or not, then the step of recovering the data packets to the signaling for uploading/deleting/updating the file previously sent by the live broadcast encoder comprises:
after receiving the live broadcast streaming data packets, firstly, the edge node server performing grouping according to the channel identifiers therein; then performing sequencing on the data packets according to the packet sequence numbers; for each data packet, determining whether the data packet is abnormal or not according to the status information, and if no, extracting and recovering a payload therein to a signaling for uploading/deleting/updating the file previously sent by the live broadcast encoder, otherwise, discarding the data packet.

## Patentansprüche

1. System für die Verteilung von Livesendungsinhalten, umfassend: einen Filmbibliothek-Server (20, 30), einen Zwischenknotenserver (21, 31) und einen Randknotenserver (22, 32), wobei
der Filmbibliothek-Server (20, 30) zumindest einen Livesendungsencoder (301), eine Signalisierungsumwandlungseinheit (302) und eine Inhaltsverteilungseinheit (303) umfasst;
wobei der Livesendungsencoder (301) dazu konfiguriert ist, nach dem Erzeugen einer Mediensegmentdatei und einer Wiedergabelistenbeschreibungsdatei eine Signalisierung für das Hochladen/Löschen/Aktualisieren der erzeugten Datei an die Signalisierungsumwandlungseinheit (302) zu senden, wobei die Signalisierung für das Hochladen/Löschen/Aktualisieren der erzeugten Datei eine HTTP-Signalisierung oder eine FTP-Signalisierung ist;
die Signalisierungsumwandlungseinheit (302) dazu konfiguriert ist, die Signalisierung für das Hochladen/Löschen/Aktualisieren der erzeugten Datei zu empfangen, die empfangene Signalisierung für das Hochladen/Löschen/Aktualisieren der erzeugten Datei in Livesendungs-Streamingdatenpakete im Format von RTP, Real-Time Transport Protocol, umzupacken, und die Livesendung-Streamingdatenpakete über die Inhaltsverteilungseinheit (303) an den Zwischenknotenserver (21, 31) zu puschen oder als Reaktion auf eine Anfrage des Zwischenknotenservers (21, 31) die Livesendung-Streamingdatenpakete über die Inhaltsverteilungseinheit (303) an den Zwischenknotenserver (21, 31) zu senden;
der Zwischenknotenserver (21, 31) dazu konfiguriert ist, die Livesendung-Streamingdatenpakete aus dem Filmbibliothek-Server (20, 30) zu empfangen, und die Livesendung-Streamingdatenpakete an den Randknotenserver (22, 32) zu puschen, oder die Livesendung-Streamingdatenpakete als Reaktion auf eine Anfrage des Randknotenservers (22, 32) an den Randknotenserver (22, 32) zusenden;
der Randknotenserver (22, 32) einen Speicher umfasst und dazu konfiguriert ist, die Livesendung-Streamingdatenpakete aus dem Zwischenknotenserver (21, 31) zu empfangen, und aus den Livesendung-Streamingdatenpaketen die zuvor durch den Livesendungsencoder (301) gesendete Signalisierung für das Hochladen/Löschen/Aktualisieren der Datei wiederherzustellen, sowie gemäß einer Anweisung der wiederhergestellten Signalisierung das Erzeugen/Löschen/Aktualisieren einer entsprechenden Mediensegmentdatei und einer Wiedergabelistenbeschreibungsdatei in dem Speicher auszulösen.

2. System nach Anspruch 1,
wobei die Signalisierungsumwandlungseinheit (302) weiter dazu konfiguriert ist: nach dem Empfangen der Signalisierung für das Hochladen/Löschen/Aktualisieren der Datei zu bestimmen, ob die Signalisierung vollständig ist oder nicht, wenn ja, die Signalisierung in Livesendung-Streamingdatenpakete im Format von RTP umzupacken, und die Inhaltsverteilungseinheit (303) auszulösen; wenn nein, zu bestimmen, ob die Länge der Daten der empfangenen Signalisierung eine vorbestimmte Schwelle erreicht oder nicht, und die Daten, deren Länge die vorbestimmte Schwelle erreicht, in Livesendung-Streamingdatenpakete im Format von RTP umzupacken; wenn die Länge der Daten der empfangenen Signalisierung kürzer als die vorbestimmte Schwelle ist, das Empfangen der Daten der Signalisierung fortzusetzen und umzupacken, bis die Länge die vorbestimmte Schwelle erreicht oder die Signalisierung vollständig ist; und die Daten, die nach einer vorbestimmten Timeout-Zeitdauer noch nicht vollständige ist oder deren Länge die vorbestimmte Schwelle noch nicht erreicht hat, zwangsweise umzupacken; und nach dem Umpacken die Inhaltsverteilungseinheit (303) auszulösen.

3. System nach Anspruch 1 oder 2, wobei der Randknotenserver (22, 32) weiterhin zumindest eine Signalisierungswiederherstellungseinheit (321) und eine Zwischenspeichereinheit (322) umfasst, wobei
die Signalisierungswiederherstellungseinheit (321) dazu konfiguriert ist, nach dem Empfangen der Livesendung-Streamingdatenpakete aus den Livesendung-Streamingdatenpaketen eine zuvor vom Livesendungsencoder (301) gesendete Signalisierung für das Hochladen/Löschen/Aktualisieren der Datei wiederherzustellen, und zu bestimmen, ob die wiederhergestellten Datenpakete abnormal ist oder nicht, und wenn ja, die Datenpakete zu verwerfen; wenn nein, die Nutzlast darin zu extrahieren und an die Zwischenspeichereinheit (322) zu senden;
die Zwischenspeichereinheit (322) dazu konfiguriert ist, nacheinander erhaltene Nutzlasten zu einer vollständigen Signalisierung für das Hochladen/Löschen/Aktualisieren der Datei zusammenzusetzen, und den Speicher (323) auszulösen, um gemäß einer Anweisung der vollständigen Signalisierung eine entsprechende Mediensegmentdatei und eine Wiedergabelistenbeschreibungsdatei zu erzeugen/löschen/aktualisieren;
der Speicher (323) dazu konfiguriert ist, die Mediensegmentdatei und die Wiedergabelistenbeschreibungsdatei zu speichern.

4. System nach Anspruch 3, wobei der Randknotenserver (22, 32) weiterhin umfasst:
eine Inhaltsservereinheit (324), der dazu konfiguriert ist:
im Fall, in dem ein Endgerät für einen Livesendungsdienst anfragt, die Mediensegmentdatei und die
Wiedergabelistenbeschreibungsdatei gemäß der Anfrage auszulesen und an das Endgerät zurückzugeben.

5. System nach Anspruch 3, wobei die Livesendung-Streamingdatenpakete zumindest eine Paketsequenznummer, einen Kanalidentifizier und eine Zustandsinformation über die Vollständigkeit eines Datenpakets umfasst, und die Signalisierungswiederherstellungseinheit (321) dazu konfiguriert ist: nach dem Empfangen der Livesendung-Streamingdatenpakete diese gemäß dem Kanalidentifizier darin zu gruppieren; dann gemäß der Paketsequenznummer die Datenpakete in Reihenfolge zu bringen; und für jedes Datenpaket gemäß der Zustandsinformation zu bestimmen, ob das Datenpaket abnormal ist oder nicht, wenn nein, eine Nutzlast darin zu extrahieren und an die Zwischenspeichereinheit (322) zu senden, ansonst das Datenpaket zu verwerfen.

6. Verfahren für die Verteilung von Livesendungsinhalten, umfassend:
nach dem Erzeugen einer Mediensegmentdatei und einer Wiedergabelistenbeschreibungsdatei Senden einer Signalisierung für das Hochladen/Löschen/Aktualisieren der erzeugten Datei an eine Signalisierungsumwandlungseinheit durch einen Livesendungsencoder, wobei die Signalisierung für das Hochladen/Löschen/Aktualisieren der erzeugten Datei eine HTTP-Signalisierung oder eine FTP-Signalisierung ist;
Umpacken der empfangenen Signalisierung für das Hochladen/Löschen/Aktualisieren der erzeugten Datei in Livesendungs-Streamingdatenpakete im Format von RTP, Real-Time Transport Protocol, (601), und Puschen der Livesendung-Streamingdatenpakete über eine Inhaltsverteilungseinheit an einen Zwischenknotenserver durch die Signalisierungsumwandlungseinheit, oder Senden der Livesendung-Streamingdatenpakete über die Inhaltsverteilungseinheit an den Zwischenknotenserver als Reaktion auf eine Anfrage des Zwischenknotenservers, bis ein Randknotenserver die Livesendung-Streamingdatenpakete von dem Zwischenknotenserver empfängt (602);
Wiederherstellen einer zuvor durch den Livesendungsencoder gesendete Signalisierung für das Hochladen/Löschen/Aktualisieren der Datei aus den Livesendung-Streamingdatenpaketen, und Auslösen des Erzeugens/Löschens/Aktualisierens einer entsprechenden Mediensegmentdatei und einer Wiedergabelistenbeschreibungsdatei in einem Speicher gemäß einer Anweisung der wiederhergestellten Signalisierung durch den Randknotenserver, der die Livesendung-Streamingdatenpakete empfängt (603).

7. Verfahren nach Anspruch 6, wobei das Verfahren weiterhin umfasst:
im Fall, in dem ein Endgerät für einen Livesendungsdienst anfragt, das Auslesen der Mediensegmentdatei und der Wiedergabelistenbeschreibungsdatei gemäß der Anfrage und Zurückgeben dieser an das Endgerät durch den Randknotenserver.

8. Verfahren nach Anspruch 6 oder 7, wobei das Umpacken der empfangenen Signalisierung für das
Hochladen/Löschen/Aktualisieren der Datei in Livesendungs-Streamingdatenpakete im Format von RTP umfasst:
Bestimmen durch den Livesendungsencoder nach dem Empfangen der Signalisierung für das Hochladen/Löschen/Aktualisieren der Datei (402), ob die Signalisierung vollständig ist oder nicht (403), wenn ja, Umpacken der Signalisierung in Livesendung-Streamingdatenpakete im Format von RTP (407); wenn nein, Bestimmen, ob die Länge der Daten der empfangenen Signalisierung eine vorbestimmte Schwelle erreicht oder nicht (404), und Umpacken der Daten, deren Länge die vorbestimmte Schwelle erreicht, in Livesendung-Streamingdatenpakete im Format von RTP (405); wenn die Länge der Daten der empfangenen Signalisierung kürzer als die vorbestimmte Schwelle ist, Fortsetzen des Empfangens der Daten der Signalisierung und Umpacken, bis die Länge die vorbestimmte Schwelle erreicht oder die Signalisierung vollständig ist (405).

9. Verfahren nach Anspruch 8, wobei das Verfahren weiterhin umfasst:
zwangsweises Umpacken der Daten, die nach einer vorbestimmten Timeout-Zeitdauer noch nicht vollständige ist oder deren Länge die vorbestimmte Schwelle noch nicht erreicht hat.

10. Verfahren nach Anspruch 6 oder 7, wobei die Livesendung-Streamingdatenpakete zumindest eine Paketsequenznummer, einen Kanalidentifizier und eine Zustandsinformation über die Vollständigkeit eines Datenpakets umfasst, und wobei das Wiederherstellen einer zuvor durch den Livesendungsencoder gesendeten Signalisierung für das Hochladen/Löschen/Aktualisieren der Datei aus den Datenpaketen umfasst:
nach dem Empfangen der Livesendung-Streamingdatenpakete zunächst Gruppieren dieser gemäß dem Kanalidentifizier darin; dann Bringen der Datenpakete in Reihenfolge gemäß der Paketsequenznummer; Bestimmen für jedes Datenpaket gemäß der Zustandsinformation, ob das Datenpaket abnormal ist oder nicht, und wenn nein, Extrahieren einer Nutzlast darin und Wiederherstellen einer zuvor durch den Livesendungsencoder gesendeten Signalisierung für das Hochladen/Löschen/Aktualisieren der Datei aus der Nutzlast, ansonst Verwerfen des Datenpakets.

## Revendications

1. Système de distribution de contenus de diffusion en direct, comprenant : un serveur de cinémathèque (20, 30), un serveur de nœud intermédiaire (21, 31) et un serveur de nœud périphérique (22, 32), dans lequel
le serveur de cinémathèque (20, 30) comprend au moins : un encodeur de diffusion en direct (301), une unité de conversion de signalisation (302) et une unité de distribution de contenus (303) ;
dans lequel, l'encodeur de diffusion en direct (301) est configuré pour, une fois un fichier de segment multimédia et un fichier de description de liste de lecture générés, envoyer une signalisation pour télécharger/supprimer/mettre à jour ledit fichier généré vers l'unité de conversion de signalisation (302), la signalisation pour télécharger/supprimer/mettre à jour ledit fichier généré étant une signalisation HTTP ou une signalisation FTP ;
l'unité de conversion de signalisation (302) est configurée pour recevoir la signalisation pour télécharger/supprimer/mettre à jour le fichier, remise la signalisation reçue pour télécharger/supprimer/mettre à jour le fichier en paquets de données en continu de diffusion en direct dans un protocole de format de transport en temps réel (RTP), et envoyer les paquets de données en continu de diffusion en direct vers le serveur de nœud intermédiaire (21, 31) à travers l'unité de distribution de contenus (303), ou envoyer les paquets de données en continu de diffusion en direct vers le serveur de nœud intermédiaire (21, 31) à une demande du serveur de nœud intermédiaire (21, 31) à travers l'unité de distribution de contenus (303) ;
le serveur de nœud intermédiaire (21, 31) est configuré pour recevoir les paquets de données en continu de diffusion en direct du serveur de cinémathèque (20, 30), et pousser les paquets de données en continu de diffusion en direct vers le serveur de nœud périphérique (22, 32), ou envoyer les paquets de données en continu de diffusion en direct vers le serveur de nœud périphérique (22, 32) à la demande du serveur de nœud périphérique (22, 32) ;
le serveur de nœud périphérique (22, 32) comprend un dispositif de stockage configuré pour recevoir les paquets de données en continu de diffusion en direct du serveur de nœud intermédiaire (21, 31), et récupérer la signalisation pour télécharger/supprimer/mettre à jour le fichier précédemment envoyé par l'encodeur de diffusion en direct (301) des paquets de données en continu de diffusion en direct, ainsi qu'un déclencheur pour générer/supprimer/mettre à jour un fichier de segment multimédia et un fichier de description de liste de lecture correspondants dans son dispositif de stockage selon une instruction de la signalisation récupérée.

2. Système selon la revendication 1,
dans lequel l'unité de conversion de signalisation (302) est configurée en outre pour : une fois la signalisation pour télécharger/supprimer/mettre à jour le fichier reçu, déterminer si la signalisation est complète ou non, si oui, remettre la signalisation en paquets de données en continu de diffusion en direct de format RTP, et déclencher l'unité de distribution de contenus (303) ;
si non, déterminer si la longueur des données de la signalisation reçue atteint ou non un seuil prédéterminé, et remettre les données ayant une longueur atteignant le seuil prédéterminé en paquets de données en continu de diffusion en direct de format RTP ; si la longueur des données de la signalisation reçue est inférieure au seuil prédéterminé, continuer à recevoir les données de la signalisation et effectuer le remise en paquets jusqu'à ce que la longueur atteigne le seuil prédéterminé ou que la signalisation soit terminée ; et effectuer obligatoirement le remise des données encore incomplètes ou ayant une longueur non atteignant encore le seuil prédéterminé en paquets une fois un délai de temporisation prédéterminé dépassé ; et déclencher l'unité de distribution de contenus (303) après le remise en paquets.

3. Système selon la revendication 1 ou 2, dans lequel le serveur de nœud périphérique (22, 32) comprend en outre au moins : une unité de récupération de signalisation (321) et une unité de cache (322), dans lequel
l'unité de récupération de signalisation (321) est configurée pour : une fois les paquets de données en continu de diffusion en direct reçus, récupérer les paquets de données en continu de diffusion en direct en une signalisation pour télécharger/supprimer/mettre à jour le fichier précédemment envoyé par le codeur de diffusion en direct (301), et déterminer si les paquets de données récupérés sont anormaux ou non, et si oui, rejeter les paquets de données ; si non, extraire et envoyer des charges utiles contenues vers l'unité de cache (322) ;
l'unité de cache (322) est configurée pour rassembler les charges utiles obtenues plusieurs fois dans une signalisation complète pour télécharger/supprimer/mettre à jour le fichier, et déclencher le dispositif de stockage (323) pour générer/supprimer/mettre à jour un fichier de segment multimédia et un fichier de description de liste de lecture correspondants selon une instruction de la signalisation complète ;
le dispositif de stockage (323) est configuré pour stocker le fichier de segment multimédia et le fichier de description de liste de lecture.

4. Système selon la revendication 3, dans lequel le serveur de nœud périphérique (22, 32) comprend en outre :
une unité de service de contenus (324), qui est configurée pour : lorsqu'un terminal utilisateur demande un service de diffusion en direct, lire et renvoyer à la demande le fichier de segment multimédia et le fichier de description de liste de lecture correspondants vers le terminal utilisateur.

5. Système selon la revendication 3, dans lequel le paquet de données en continu de diffusion en direct comprend au moins : un numéro de séquence de paquet, un identifiant de canal et une information d'état indiquant si un paquet de données est complet ou non, l'unité de récupération de signalisation (321) étant configurée pour : une fois les paquets de données en continu de diffusion en direct reçus, effectuer un regroupement selon les identifiants de canal contenues ; puis mettre les paquets de données en séquence selon les numéros de séquence de paquet ; et déterminer pour chaque paquet de données,
si le paquet de données est anormal ou non selon l'information d'état, si non, extraire et envoyer une charge utile contenues vers l'unité de cache (322), sinon, rejeter le paquet de données.

6. Procédé de distribution de contenus de diffusion en direct, comprenant :
un encodeur de diffusion en direct, une fois un fichier de segment multimédia et un fichier de description de liste de lecture générés, envoyant une signalisation pour télécharger/supprimer/mettre à jour ledit fichier généré vers l'unité de conversion de signalisation, la signalisation pour télécharger/supprimer/mettre à jour ledit fichier généré étant une signalisation HTTP ou une signalisation FTP ;
l'unité de conversion de signalisation remettant la signalisation pour télécharger/supprimer/mettre à jour le fichier reçue en paquets de données en continu de diffusion en direct dans un protocole de format de transport en temps réel, RTP, (601), et
poussant les paquets de données en continu de diffusion en direct vers un serveur de nœud intermédiaire à travers une unité de distribution de contenus, ou envoyant les paquets de données en continu de diffusion en direct vers le serveur de nœud intermédiaire à la demande du serveur de nœud intermédiaire à travers l'unité de distribution de contenus jusqu'à ce qu'un serveur de nœud périphérique reçoive les paquets de données en continu de diffusion en direct du serveur de nœud intermédiaire ( 602) ;
le serveur de nœud périphérique qui reçoit les paquets de données en continu de diffusion en direct récupérant les paquets de données en continu de diffusion en direct en signalisation pour télécharger/supprimer/mettre à jour le fichier précédemment envoyé par l'encodeur de diffusion en direct, et déclenchant pour générer/supprimer/mettre à jour un fichier de segment multimédia et un fichier de description de liste de lecture correspondants dans son dispositif de stockage selon une instruction de la signalisation récupérée (603).

7. Procédé selon la revendication 6 comprenant en outre :
lorsqu'un terminal utilisateur demande un service de diffusion en direct, le serveur de nœud périphérique lisant et renvoyant à la demande le fichier de segment multimédia et le fichier de description de liste de lecture correspondants vers le terminal utilisateur.

8. Procédé selon la revendication 6 ou 7, dans lequel l'étape de remettre la signalisation reçue en paquets pour télécharger/supprimer/mettre à jour le fichier dans un flux de diffusion en direct de format RTP comprend :
une fois la signalisation pour télécharger/supprimer/mettre à jour le fichier reçue (402) de l'encodeur de diffusion en direct, le serveur de cinémathèque déterminant si la signalisation est complète ou non (403), si oui, remettant la signalisation en paquets de données en continu de diffusion en direct de format RTP (407) ; si non, déterminant si la longueur des données de la signalisation reçue atteint ou non un seuil prédéterminé (404), et remettant les données ayant une longueur atteignant le seuil prédéterminé en paquets de données en continu de diffusion en direct de format RTP (405) ; si la longueur des données de la signalisation reçue est inférieure au seuil prédéterminé, continuant à recevoir les données de la signalisation et effectuant le remise en paquets jusqu'à ce que la longueur atteigne le seuil prédéterminé ou que la signalisation soit terminée (405).

9. Procédé selon la revendication 8 comprenant en outre :
effectuer obligatoirement le remise des données encore incomplètes ou ayant une longueur non atteignant encore le seuil prédéterminé en paquets une fois un délai de temporisation prédéterminé dépassé.

10. Procédé selon la revendication 6 ou 7, dans lequel le paquet de données en continu de diffusion en direct comprend au moins : un numéro de séquence de paquet, un identifiant de canal et une information d'état indiquant si un paquet de données est complet ou non, puis l'étape de récupération des paquets de données en signalisation pour télécharger/supprimer/mettre à jour le fichier précédemment envoyé par le codeur de diffusion en direct comprend :
une fois les paquets de données en continu de diffusion en direct reçus, tout d'abord, le serveur de nœud périphérique effectuant un regroupement selon les identifiants de canal contenues ; puis mettant les paquets de données en séquence selon les numéros de séquence de paquet ; pour chaque paquet de données, déterminant si les paquets de données sont anormaux ou non selon l'information d'état, et si non, extraire et récupérer en signalisation pour télécharger/supprimer/mettre à jour le fichier précédemment envoyé par l'encodeur de diffusion en direct, sinon, rejeter le paquet de données.
